# EUROPÄISCHE PATENTSCHRIFT

(11) **EP 3 394 497 B1**
(45) Veröffentlichungstag und Bekanntmachung des Hinweises auf die Patenterteilung: **28.07.2021**
(21) Anmeldenummer: 16822903.7
(22) Anmeldetag: 22.12.2016
(51) Int. Cl.: F16N 3/12

(54) **SCHMIERSTOFFPRESSE, SCHMIERSTOFFPRESSEN-SET UND VERWENDUNG EINER KARTUSCHE BEI EINER SCHMIERSTOFFPRESSE**
LUBRICANT PRESS, LUBRICANT PRESS KIT, AND USE OF A CARTRIDGE IN CASE OF A LUBRICANT PRESS
PRESSE DE LUBRIFIANT, ENSEMBLE DE PRESSES DE LUBRIFIANT ET UTILISATION D'UNE CARTOUCHE DANS UNE PRESSE DE LUBRIFIANT

(30) Priorität: 23.12.2015 DE 102015016821
(43) Veröffentlichungstag der Anmeldung: 31.10.2018
(73) Patentinhaber: Pressol - Schmiergeräte Gesellschaft mit beschränkter Haftung, 79224 Umkirch (DE)
(72) Erfinder: SCHLENKER, Rudolf, 6353 Weggis (CH)
(74) Vertreter: Mertzlufft-Paufler, Cornelius
(86) Internationale Anmeldenummer: PCT/EP2016/002158
(87) Internationale Veröffentlichungsnummer: WO 2017/108185

(56) Entgegenhaltungen:
- DE-U1-202012 103 334
- DE-U1-202013 102 560
- US-A- 4 168 787
- US-A- 4 664 298

## Beschreibung

Die Anmeldung betrifft eine Schmierstoffpresse mit einem Pressenkopf, der eine Kartuschenaufnahme aufweist, wobei die Kartuschenaufnahme eine Abschlusswand aufweist, in welcher ein Durchlass zu einen Hochdruckraum mündet, wobei in dem Hochdruckraum ein Presskolben beweglich angeordnet ist, der mit einem an dem Pressenkopf angebrachten Handhebel in Betätigungsverbindung steht, und wobei der Hochdruckraum in eine Auslassöffnung mündet, und mit einem in eine Kartusche einsetzbaren Folgekolben.

Die Erfindung betrifft weiter ein Schmierstoffpressen-Set mit einer Schmierstoffpresse, insbesondere wie beschrieben, und mit einer Kartusche, wobei die Kartusche eine ein Füllvolumen umschließende Kartuschenhülse aufweist, wobei in die Kartuschenhülse der Folgekolben der Schmierstoffpresse beweglich eingesetzt ist, um das Füllvolumen abzuschließen.

Die Erfindung betrifft schließlich eine Verwendung einer Kartusche bei einer Schmierstoffpresse n-Set (26).

Schmierstoffpressen sind bekannt und werden beispielsweise verwendet, um Schmierstoff aus einer Kartusche an möglicherweise schwer zugängliche Stellen zu fördern.

Aus der DE 20 2013 102 560 U ist eine Fettpresse mit einem Pressenkopf, einem lösbar an den Pressenkopf angekuppelten Pressenrohr und einem an dem Pressenkopf ausgebildeten Anschluss für eine in dem Pressenrohr aufgenommene Kartusche bekannt, wobei vorgesehen ist, dass das Pressenrohr im Bereich seines hinteren, vom Pressenkopf abgewandten Endes ein Anschlag für die Kartusche bildet, dessen axiale Position so an die Länge der Kartusche angepasst ist, dass die Kartusche in einer an dem Abschluss anliegenden Position hält.

Aus der US 4,168,787 ist eine Fettpresse mit einem Pressenrohr bekannt, bei dem ein Folgekolben in dem Pressenrohr beweglich angeordnet ist und bei der in dem Pressenkopf ein Kolben in einer Kammer vorgesehen ist, welche über ein Ventil mit dem von dem Pressenrohr gebildeten Volumen in Verbindung steht.

Die DE 20 2012 103 334 U1 offenbart einen Stempel für eine Fettpresse mit einem scheibenförmigen Absperrelement, das dazu ausgebildet ist, schließend in einem Rohr der Fettpresse geführt zu werden und mit einer umlaufenden gummielastischen Dichtung an der Innenfläche des Rohres abzudichten, wobei vorgesehen ist, dass das Absperrelement zwei Scheiben aufweist, die die Dichtung klemmend zwischen sich aufnehmen und deren Abstand mittels einer Spanneinrichtung verstellbar ist.

Aus der US 4,664,298 ist eine Fettpresse bekannt, bei der durch eine Veränderung der effektiven Länge eines Hebelarms die Fettpresse entweder in einem Hochdruckmodus oder in einem Hochvolumenmodus betreibbar ist.

Der Erfindung liegt die Aufgabe zugrunde, die Gebrauchseigenschaften einer Schmierstoffpresse zu verbessern.

Zur Lösung der Aufgabe sind erfindungsgemäß die Merkmale des Anspruchs 1 vorgesehen. Insbesondere wird somit bei einer Schmierstoffpresse der eingangs beschriebenen Art erfindungsgemäß vorgeschlagen, dass eine in Gebrauchsstellung der Abschlusswand zugewandte Oberseite des Folgekolbens eine Kontur aufweist, die passend zu einer Kontur der Abschlusswand ausgebildet ist, so dass der Folgekolben mit seiner Oberseite zumindest in einem Teilbereich an der Abschlusswand flächig anlegbar ist. Von Vorteil ist dabei, dass ein verbleibendes Totvolumen so gering wie möglich ausbildbar ist. Insbesondere sind somit Rückstände, die sich bisher in Kavitäten zwischen dem Pressenkopf und dem Folgekolben in dessen Endposition gebildet hatten, vermeidbar. Es sind somit auch Standard-Kartuschen schmierstoffsparend verwendbar, die an ihrer Oberseite keine spezielle Anpassung an einen spezifischen Pressenkopf und insbesondere keinen Schraubanschluss für einen Durchlass aufweisen.

Bei einer vorteilhaften Ausgestaltung kann vorgesehen sein, dass eine Eintrittsöffnung des Durchlasses an einer in einer Kartuschen-Einsetzrichtung, die durch die Kartuschenaufnahme definiert ist, am weitesten im Pressenkopf liegenden Stelle der Abschlusswand ausgebildet ist. Somit sind Rückstandsbildungen von Schmierstoff in der Kartuschenaufnahme, beispielsweise in Taschen, vermeidbar.

Bei einer vorteilhaften Ausgestaltung kann vorgesehen sein, dass die Abschlusswand zumindest im Teilbereich eben ausgebildet ist. Somit sind Hindernisse, an denen sich Schmierstoffrückstände ansammeln können, im Teilbereich vermeidbar. Besonders günstig ist es, wenn die Abschlusswand eben ausgebildet ist. Somit ist einfach erreichbar, dass die Eintrittsöffnung an einem höchsten Punkt - in Einsteck- oder Förderrichtung gesehen - angeordnet werden kann. Alternativ oder zusätzlich kann vorgesehen sein, dass die Oberseite eben ausgebildet ist. Somit ist ein Totvolumen an der Oberseite, in welchem sich Schmierstoffrückstände ansammeln könnten, vermeidbar. Besonders günstig ist es, wenn der Teilbereich und die Oberfläche aufeinander abgestimmt eben ausgebildet sind. Somit kann die Oberfläche auf einfache Weise flächig an den Teilbereich angelegt werden, um Schmierstoff vollständig zu verdrängen.

Bei einer vorteilhaften Ausgestaltung kann vorgesehen sein, dass der Durchlass in der Abschlusswand zumindest teilweise außerhalb des Teilbereichs angeordnet ist. Von Vorteil ist dabei, dass der Durchlass hinter einem verbleibenden Totvolumen in der Kartuschenaufnahme anordenbar ist. Somit ist erreichbar, dass Schmierstoff in diesem Totvolumen nach Einsetzen einer neuen Kartusche zumindest teilweise austauschbar ist. Von Vorteil ist weiter, dass der Durchlass seitlich in Bezug auf einen vorzugsweise mittig in der Kartuschenaufnahme ausgebildeten Teilbereich anordnenbar ist, wodurch ohne Vergrößerung eines Außenmaßes ein langer Weg für einen Presskolben zur Verfügung stellbar ist.

Bei einer vorteilhaften Ausgestaltung kann vorgesehen sein, dass der Folgekolben eine um die Oberseite umlaufend Schulter aufweist. Von Vorteil ist dabei, dass der Folgekolben so ausgebildet werden kann, dass die Oberseite durch eine Entnahmeöffnung einer Kartusche hindurchgreifen kann. Somit ist ein Totvolumen, also ein verbleibendes Volumen bei aufgebrauchter Kartusche, bei welcher der Folgekolben in einer Endposition gelangt ist, in der Kartuschenaufnahme reduzierbar.

Besonders günstig ist es dabei, wenn die Schulter eine ringförmige Schulterfläche aufweist. Die Schulterfläche kann parallel zu der Oberseite ausgerichtet sein. Somit ist der Folgekolben passend in seiner Form zu einer Entnahmeöffnung einer Standard-Kartusche ausbildbar, bei welcher die Entnahmeöffnung durch einen nach innen von der Kartuschenhülse abragenden, umlaufenden Kragen ausgebildet ist.

Bei einer vorteilhaften Ausgestaltung kann vorgesehen sein, dass der Folgekolben durchbrechungsfrei ausgebildet ist. Somit sind Führungsstäbe verzichtbar und der Folgekolben ist einfach abgedichtet ausbildbar.

Bei einer vorteilhaften Ausgestaltung kann vorgesehen sein, dass der Folgekolben eine umlaufende Dichtlippe aufweist. Somit ist ein Ringschlitz zwischen dem Folgekolben und der Kartuschenhülse abdichtbar.

Bei einer vorteilhaften Ausgestaltung kann vorgesehen sein, dass an der Kartuschenaufnahme ein Innengewinde ausgebildet ist. Somit ist eine Kartusche einfach in der Kartuschenaufnahme lösbar befestigbar.

Bei einer vorteilhaften Ausgestaltung kann vorgesehen sein, dass ein Aufnahmerohr in die Kartuschenaufnahme eingeschraubt ist, das an einem freien Ende offen ausgebildet ist. Somit ist eine Standard-Kartusche, die an ihrer Außenseite einen umlaufenden Bund aufweist, einfach lösbar in der Kartuschenaufnahme befestigbar. Eine Ausbildung eines Gewindes an der Kartusche ist nicht erforderlich. Das Aufnahmerohr bietet einen mechanischen Schutz, indem es beispielsweise länger als die Kartusche ausbildbar ist. Durch die offene Ausgestaltung am unteren freien Ende erlaubt das Aufnahmerohr einfach das Eindringen von Luft zum Ausgleich bei fortschreitendem Folgekolben.

Zur Abdichtung kann in die Kartuschenaufnahme ein Dichtring an an einer Position eingelegt sein, an welcher die Kartuschenhülse die Abschlusswand kontaktiert.

Bei einer vorteilhaften Ausgestaltung kann vorgesehen sein, dass in dem Durchlass ein Rückschlagventil angeordnet ist. Von Vorteil ist dabei, dass Zurückdrücken des Schmierstoffs in die Kartuschenaufnahme verhinderbar ist.

Bei einer vorteilhaften Ausgestaltung kann vorgesehen sein, dass dem Durchlass eine Kolbenpumpe nachgeschaltet ist. Somit ist eine Entnahme von Schmierstoff auch bei unbeaufschlagtem Folgekolben erreichbar. Bevorzugt ist die Kolbenpumpe mit einem Handhebel ausgerüstet, um einen Presskolben manuell betätigen zu können.

Zur Lösung der genannten Aufgabe von möglicherweise eigenständiger erfinderischer Qualität werden erfindungsgemäß die Merkmale des nebengeordneten, auf ein Schmierstoffpresse-Set gerichteten Anspruchs vorgeschlagen. Insbesondere wird somit bei einem Schmierstoffpressen-Set der eingangs beschriebenen Art zur Lösung der genannten Aufgabe erfindungsgemäß vorgeschlagen, dass eine Form des Folgekolbens derart auf die Kartusche abgestimmt ist, dass das Füllvolumen der Kartuschenhülse mit dem Folgekolben restlos entleerbar ist. Von Vorteil ist dabei, dass durch einfache Maßnahmen eine Rückstandsbildung von unentnehmbarem Schmierstoff in der aufgebrauchten Kartusche verhinderbar ist. Dies erhöht die Ergiebigkeit der Kartusche und verbessert somit die Gebrauchseigenschaften der Schmierstoffpresse.

Bei einer vorteilhaften Ausgestaltung kann vorgesehen sein, dass das Füllvolumen der Kartuschenhülse durch eine eine Verengung bildende Entnahmeöffnung begrenzt ist und dass ein Außendurchmesser der Oberseite des Folgekolbens auf einen Innendurchmesser der Entnahmeöffnung abgestimmt ist. Bevorzugt ist die Entnahmeöffnung vor Erstgebrauch verschlossen und wird erst kurz vor dem Erstgebrauch beispielsweise durch Abreißen eines Verschlusses geöffnet. Von Vorteil ist dabei, dass der Folgekolben mit einer großflächigen Oberseite ausbildbar ist, um einen möglichst großen Teilbereich an der Abschlusswand abzudecken. Somit ist ein kleines Totvolumen bildbar.

Bei einer vorteilhaften Ausgestaltung kann vorgesehen sein, dass eine Höhe einer um die Oberseite umlaufenden Schulter, beispielsweise der bereits erwähnten Oberseite, des Folgekolbens auf einen Überstand der Kartuschenhülse über die Entnahmeöffnung abgestimmt ist. Somit ist einfach erreichbar, dass der Folgekolben in seiner Endposition an dem Teilbereich flächig anliegt. Hierbei kann die Höhe größer als der Überstand gewählt sein, um Raum für eine Dichtung zu geben.

Bei einer vorteilhaften Ausgestaltung kann vorgesehen sein, dass eine ringförmige Schulterfläche einer um die Oberseite umlaufenden Schulter, insbesondere der bereits erwähnten Oberseite, auf eine zwischen der Entnahmeöffnung und der Kartuschenhülse ausgebildete ringförmige Innenfläche abgestimmt ist. Somit ist einfach verhinderbar, dass in der aufgebrauchten Kartusche Rückstände an der Verengung verbleiben.

Bei einer vorteilhaften Ausgestaltung kann vorgesehen sein, dass der Folgekoben unbeaufschlagt in der Kartuschenhülse angeordnet ist. Der Folgekolben wandert somit in der Kartuschenhülse allein aufgrund eines durch den Durchlass an die Kartuschenaufnahme anliegenden Unterdrucks. Somit ist eine Abdichtung zwischen der Kartuschenhülse und dem Folgekolben einfach ausbildbar. Der Folgekolben kann alternativ oder zusätzlich mit dem Pressenkopf unverbunden in der Kartuschenhülse angeordnet sein. Somit sind zusätzlich bewegliche Teile zur Betätigung oder Beaufschlagung des Folgekolbens von außen verzichtbar. Der Folgekolben kann alternativ oder zusätzlich herausnehmbar in der Kartuschenhülse angeordnet sein. Von Vorteil ist dabei, dass der Folgekolben wiederverwendbar ist.

Zur Lösung der genannten Aufgabe ist erfindungsgemäß bei einer Verwendung einer Kartusche bei einer erfindungsgemäßen Schmierstoffpresse, insbesondere wie zuvor beschrieben und/oder nach einem der auf eine Schmierstoffpresse gerichteten Ansprüche, vorgeschlagen, dass die Kartusche oberseitig geöffnet wird und dass vor einer Entnahme von Schmierstoff aus der Kartusche der Folgekolben der Schmierstoffpresse unterseitig in die Kartusche eingesetzt wird, um ein Füllvolumen in der Kartusche abzuschließen und dass nach einer vollständigen Entleerung der Kartusche der Folgekolben mit seiner Oberseite flächig an dem Teilbereich anliegt. Von Vorteil ist dabei, dass die Kartusche auf einfache Weise vollständig entleerbar ist. Der Folgekolben kann hierbei vor oder nach dem Einsetzen der Kartusche in die Kartuschenaufnahme eingesetzt werden.

Die Erfindung wird nun anhand eines Ausführungsbeispiels näher beschrieben, ist aber nicht auf dieses Ausführungsbeispiel beschränkt. Weiter Ausführungsbeispiele ergeben sich durch Kombination der Merkmale einzelner oder mehrerer Schutzansprüche untereinander und/oder mit einzelnen oder mehreren Merkmalen des Ausführungsbeispiels.

Es zeigt:
- Fig. 1: eine Schnittdarstellung einer erfindungsgemäßen Schmierstoffpresse mit eingesetzter, befüllter Kartusche von Beginn des Schmierstoffaustrags aus der Kartusche, wobei der Folgekolben in einer Anfangsposition angeordnet ist, und
- Fig. 2: eine Schnittdarstellung analog zu Fig. 1, wobei die Kartusche aufgebraucht und der Folgekolben in seiner Endposition befindlich ist.

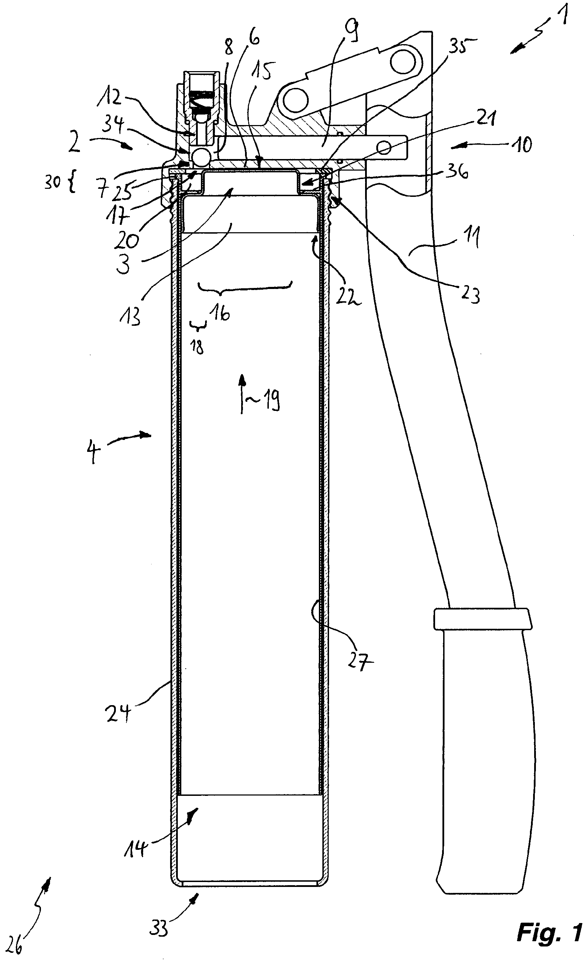

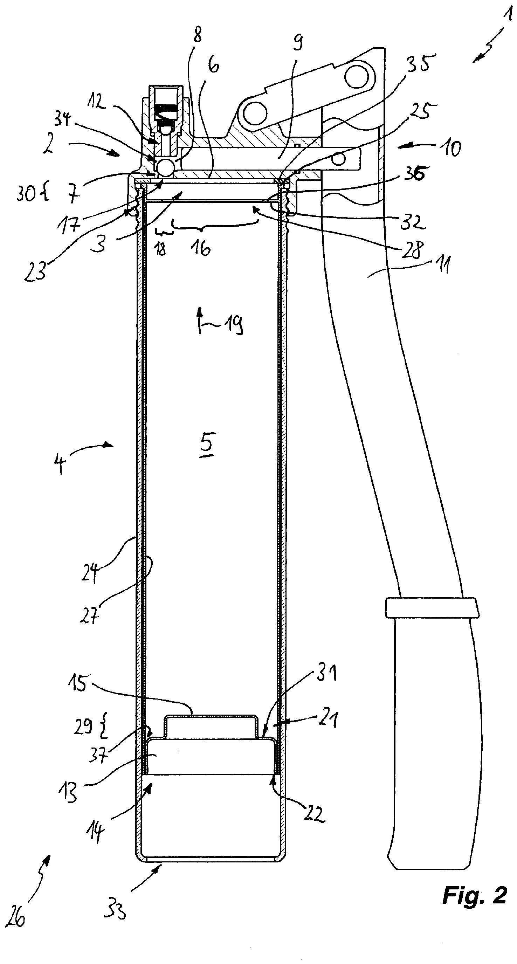

Eine in Fig. 1 und Fig. 2 gezeigte, im Ganzen mit 1 bezeichnete Schmierstoffpresse hat einen Pressenkopf 2. An dem Presskopf 2 ist eine Kartuschenaufnahme 3 ausgebildet, in welche einen Kartusche 4 einsetzbar ist. Fig. 1 zeigt hierbei die Kartusche 4 in einem Zustand, in welchem ein Füllvolumen 5 mit einem Schmierstoff befüllt ist, während Fig. 2 die aufgebrauchte und vollständig entleerte Kartusche 4 zeigt.

In der Kartuschenaufnahme 3 ist eine Abschlusswand 6 ausgebildet. Die Abschlusswand 6 hat einen Durchlass 7, der in einen Hochdruckraum 8 mündet.

In dem Hochdruckraum 8 ist ein Presskolben 9 einer Kolbenpumpe 10 angeordnet, der mit einem Handhebel 11 von außen in dem Hochdruckraum 8 bewegt werden kann. Der Hochdruckraum 8 weist eine Auslassöffnung 12 auf, durch die Schmierstoff aus dem Füllvolumen 5 austritt.

Die Schmierstoffpresse 4 hat weiter einen Folgekolben 13, der in ein offenes Ende 14 - mit seiner Oberseite 15 voran - einsetzbar ist.

Die Oberseite 15 ist somit in Gebrauchsstellung der Abschlusswand 6 zugewandt angeordnet und weist eine Kontur auf, die passend zu einer Kontur der Abschlusswand 6 ausgebildet ist. Somit ist erreichbar, dass der Folgekolben 13 mit seiner Oberseite 15 in einem Teilbereich 16 an der Abschlusswand 6 flächig anliegt, wenn die Kartusche 4 aufgebraucht ist (Fig. 2). An diesem Teilbereich 16 verbleiben somit keine Schmierstoffreste.

Der Durchlass 7 ist so angeordnet, dass eine Eintrittsöffnung 17 des Durchlasses 7 an einer am weitesten im Pressenkopf liegenden Stelle 18 der Abschlusswand 6 ausgebildet ist. Somit liegt die Eintrittsöffnung 19 in einer durch die Kartuschenaufnahme 3 vorgegebene Kartuschen-Einsetzrichtung 19 am hinterster Stelle - im Ausführungsbeispiel gemeinsam mit weiteren Stellen der Abschlusswand 6. Es sind somit keine Taschen vorhanden, in denen sich Schmierstoffreste ansammeln könnten.

Die Abschlusswand 6 ist hierbei passend zu der Oberseite 15 eben ausgebildet.

Der Durchlass 7 ist teilweise außerhalb des Teilbereichs 15 direkt vor dem verbleibenden Totvolumen 20 in der Kartuschenaufnahme 3 angeordnet. Nach einem Austausch der aufgebrauchten Kartusche 4 gegen eine neue wird diese Totvolumen 20 somit zumindest teilweise zuerst entnommen. Die seitliche Anordnung des Durchlasses 7 bietet außerdem genügend Platz für die Anordnung des länglichen Hochdruckraums 8 innerhalb des Pressenkopfs 2.

An dem Folgekolben 13 ist eine Schulter 21 ausgebildet, die um die Oberseite 15 umläuft und die Oberseite 16 begrenzt.

Die Schulter 21 bildet somit eine Schulterfläche 31, die ringförmig ist und parallel zu der Oberseite 15 ausgerichtet ist. Diese Form ist auf die Kartusche 4 abgestimmt, wie noch genauer erläutert wird.

Der Folgekolben 13 ist ohne einen in der Kartusche 4 anzuordnenden Führungsstab durchbrechungsfrei ausgebildet und weist eine ringförmig umlaufende Dichtlippe 22 auf. Die Dichtlippe 22 dichtet somit einen Ringschlitz 37 zwischen dem Folgekolben 13 und einer Kartuschenhülse 27 ab.

An der Kartuschenaufnahme 3 ist ein Innengewinde 23 ausgebildet, in welches ein Aufnahmerohr 24 in die Kartuschenaufnahme 3 eingeschraubt wird, um die Kartusche an einem Bund 25 zu halten. Das Aufnahmerohr 24 ist an seinem freien Ende 33 offen ausgebildet.

In dem Durchlass 7 ist ein Rückschlagventil 34 angeordnet, um einen Rückfluss von Schmierstoff in die Kolbenaufnahme 3 zu verhindern, wenn die dem Durchlass 7 nachgeschaltete Kolbenpumpe 10 betätigt wird.

Die Schmierstoffpresse 1 bildet mit der austauschbaren Kartusche 4 somit ein Schmierstoffpressen-Set 26.

In der Kartuschenhülse 27 ist das Füllvolumen 5 ausgebildet und mit Schmierstoff befüllt. Der Folgekolben 13 ist wie beschrieben in die Kartuschenhülse 27 beweglich eingesetzt und wandert mit einer Entnahme von Schmierstoff auf die Abschlusswand 6 zu, bis er in dem Teilbereich 16 flächig anliegt.

Aus Fig. 2 ist ersichtlich, dass eine Form des Folgekolbens 13 auf die Kartusche 4 abgestimmt ist, damit das Füllvolumen 5 der Kartuschenhülse 27 mit dem Folgekolben 13 restlos entleerbar ist.

Das Füllvolumen 5 der Kartuschenhülse 27 durch eine Entnahmeöffnung 28 begrenzt, die in der Kartuschenhülse 27 eine Verengung bildet. Die Entnahmeöffnung 28 ist vor Erstgebrauch verschlossen.

Ein Außendurchmesser der Oberseite 15 des Folgekolbens 13 ist zur Erreichung der Formanpassung auf einen Innendurchmesser der Entnahmeöffnung 28 abgestimmt, hier also gleich groß ausgebildet. Weiter ist eine Höhe 29 der Schulter 21 auf einen Überstand 30 der Kartuschenhülse 4 über die Entnahmeöffnung 28 abgestimmt, hier also bis auf die Höhe einer Dichtung 35 gleich groß ausgebildet. Die Schulterfläche 31 ist schließlich auf eine ringförmige Innenfläche 32 abgestimmt, hier also gleich groß ausgebildet, wobei diese Innenfläche 32 an einem nach innen abragenden Kragen 36 zwischen der Entnahmeöffnung 28 und der Kartuschenhülse 31 ausgebildet ist.

Der durchbrechungsfreie Folgekolben 5 ist unbeaufschlagt und mit dem Pressenkopf 2 unverbunden und somit herausnehmbar in der Kartuschenhülse 27 angeordnet ist. Der Folgekolben 5 wird somit alleine durch den Schmierstoff mitgesaugt und übt selbst keinen Druck aus.

Im Gebrauch wird die Kartusche 4 somit oberseitig geöffnet, und es wird der Folgekolben 13 unterseitig in die Kartusche 4 eingesetzt. Hierdurch wird das Füllvolumen 5 in der Kartusche 4 abgeschlossen. Nach einer vollständigen Entleerung der Kartusche 4 liegt der Folgekolben 13 mit seiner Oberseite 15 flächig an dem Teilbereich 16 der Abschlusswand 6 an.

Bei einer Schmierstoffpresse 1 wird somit vorgeschlagen, einen in eine Kartusche 4 einsetzbaren Folgekolben 13 und eine Abschlusswand 6 einer Kartuschenaufnahme 3 so aufeinander und auf die Kartusche 4 abzustimmen, dass der Folgekolben 13 in der aufgebrauchten Kartusche 4 an der Abschlusswand 6 flächig anliegt.

### Bezugszeichenliste

- 1: Schmierstoffpresse
- 2: Pressenkopf
- 3: Kartuschenaufnahme
- 4: Kartusche
- 5: Füllvolumen
- 6: Abschlusswand
- 7: Durchlass
- 8: Hochdruckraum
- 9: Presskolben
- 10: Kolbenpumpe
- 11: Handhebel
- 12: Auslassöffnung
- 13: Folgekolben
- 14: offenes Ende
- 15: Oberseite
- 16: Teilbereich
- 17: Eintrittsöffnung
- 18: Stelle
- 19: Kartuschen-Einsetzrichtung
- 20: Totvolumen
- 21: Schulter
- 22: Dichtlippe
- 23: Innengewinde
- 24: Aufnahmerohr
- 25: Bund
- 26: Schmierstoffpressen-Set
- 27: Kartuschenhülse
- 28: Entnahmeöffnung
- 29: Höhe
- 30: Überstand
- 31: Schulterfläche
- 32: Innenfläche
- 33: Ende
- 34: Rückschlagventil
- 35: Dichtung
- 36: Kragen
- 37: Ringschlitz

## Patentansprüche

1. Schmierstoffpressen-Set (26) mit einer Schmierstoffpresse (1) und mit einer Kartusche (4), wobei die Schmierstoffpresse (1) einen Pressenkopf (2) umfasst, der eine Kartuschenaufnahme (3) aufweist, wobei die Kartuschenaufnahme (3) eine Abschlusswand (6) aufweist, in welcher ein Durchlass (7) zu einen Hochdruckraum (8) mündet, wobei in dem Hochdruckraum (8) ein Presskolben (9) beweglich angeordnet ist, der mit einem an dem Pressenkopf (2) angebrachten Handhebel (11) in Betätigungsverbindung steht, und wobei der Hochdruckraum (8) in eine Auslassöffnung (12) mündet, und wobei die Schmierstoffpresse (1) einen in die Kartusche (4) einsetzbaren Folgekolben (13) umfasst, und wobei die Kartusche (4) eine ein Füllvolumen (5) umschließende Kartuschenhülse (27) aufweist, wobei in die Kartuschenhülse (27) der Folgekolben (13) der Schmierstoffpresse (1) beweglich eingesetzt ist, um das Füllvolumen (5) abzuschließen, wobei eine Form des Folgekolbens (13) derart auf die Kartusche (4) abgestimmt ist, dass das Füllvolumen (13) der Kartuschenhülse (27) mit dem Folgekolben (13) restlos entleerbar ist, **dadurch gekennzeichnet, dass** eine in Gebrauchsstellung der Abschlusswand (6) zugewandte Oberseite (15) des Folgekolbens (13) eine Kontur aufweist, die passend zu einer Kontur der Abschlusswand (6) ausgebildet ist und der Folgekolben (13) eine um die Oberseite (15) umlaufende Schulter (21) aufweist, so dass der Folgekolben (13) mit seiner Oberseite (15) durch eine Entnahmeöffnung (28) der Kartusche (4) hindurchgreift und zumindest in einem Teilbereich (16) an der Abschlusswand (6) flächig anliegt, wenn die Kartusche (4) aufgebraucht ist.

2. Schmierstoffpressen-Set (26) nach Anspruch 1, **dadurch gekennzeichnet, dass** eine Eintrittsöffnung (17) des Durchlasses (7) an einer in einer Kartuschen-Einsetzrichtung (19), die durch die Kartuschenaufnahme (3) definiert ist, am weitesten im Pressenkopf (2) liegenden Stelle (18) der Abschlusswand (6) ausgebildet ist und/oder dass die Abschlusswand (6) zumindest im Teilbereich (16) und/oder die Oberseite (15) eben ausgebildet ist/sind.

3. Schmierstoffpressen-Set (26) nach Anspruch 1 oder 2, **dadurch gekennzeichnet, dass** der Durchlass (7) in der Abschlusswand (6) zumindest teilweise außerhalb des Teilbereichs (16) angeordnet ist.

4. Schmierstoffpressen-Set (26) nach einem der Ansprüche 1 bis 3, **dadurch gekennzeichnet, dass** die Schulter (21) eine ringförmige, vorzugsweise parallel zu der Oberseite (15) ausgerichtete Schulterfläche (31) aufweist.

5. Schmierstoffpressen-Set (26) nach einem der Ansprüche 1 bis 4, **dadurch gekennzeichnet, dass** der Folgekolben (13) durchbrechungsfrei ausgebildet ist und/oder dass der Folgekolben (13) eine umlaufende Dichtlippe (22) aufweist.

6. Schmierstoffpressen-Set (26) nach einem der Ansprüche 1 bis 5, **dadurch gekennzeichnet, dass** an der Kartuschenaufnahme (3) ein Innengewinde (23) ausgebildet ist und/oder dass ein Aufnahmerohr (24) in die Kartuschenaufnahme (3) eingeschraubt ist, das an einem freien Ende (33) offen ausgebildet ist.

7. Schmierstoffpressen-Set (26) nach einem der Ansprüche 1 bis 6, **dadurch gekennzeichnet, dass** in dem Durchlass (7) ein Rückschlagventil (34) angeordnet ist und/oder dass dem Durchlass (7) eine Kolbenpumpe (10) nachgeschaltet ist.

8. Schmierstoffpressen-Set (26) nach einem der vorangehenden Ansprüche, **dadurch gekennzeichnet, dass** das Füllvolumen (5) der Kartuschenhülse (27) durch eine vorzugsweise vor Erstgebrauch verschlossene, eine Verengung bildende Entnahmeöffnung (28) begrenzt ist und dass ein Außendurchmesser der Oberseite (15) des Folgekolbens (13) auf einen Innendurchmesser der Entnahmeöffnung (28) abgestimmt ist.

9. Schmierstoffpressen-Set (26) nach einem der vorangehenden Ansprüche, **dadurch gekennzeichnet, dass** eine Höhe (29) der oder einer um die Oberseite (15) umlaufenden Schulter (21) des Folgekolbens (13) auf einen Überstand (30) der Kartuschenhülse (27) über die Entnahmeöffnung (28) abgestimmt ist und/oder dass eine ringförmige Schulterfläche (22) der oder einer um die Oberseite (15) umlaufenden Schulter (21) auf eine zwischen der Entnahmeöffnung (28) und der Kartuschenhülse (27) ausgebildete ringförmige Innenfläche (32) abgestimmt ist.

10. Schmierstoffpressen-Set (26) nach einem der vorangehenden Ansprüche, **dadurch gekennzeichnet, dass** der Folgekolben (13) unbeaufschlagt und/oder mit dem Pressenkopf (2) unverbunden und/oder herausnehmbar in der Kartuschenhülse (27) angeordnet ist.

11. Verwendung einer Kartusche (4) bei einem Schmierstoffpressen-Set (26) nach einem der vorangehenden Ansprüche, **dadurch gekennzeichnet, dass** die Kartusche (4) oberseitig geöffnet wird und dass vor einer Entnahme von Schmierstoff aus der Kartusche (4) der Folgekolben (13) der Schmierstoffpresse (1) unterseitig in die Kartusche (4) eingesetzt wird, um ein Füllvolumen in der Kartusche abzuschließen und dass nach einer vollständigen Entleerung der Kartusche (4) der Folgekolben (4) mit seiner Oberseite (15) flächig an dem Teilbereich (16) anliegt.

## Claims

1. Lubricant press set (26) having a lubricant press (1) and having a cartridge (4), wherein the lubricant press (1) comprises a press head (2) which has a cartridge-receiving part (3), wherein the cartridge-receiving part (3) has a terminating wall (6) in which a passage (7) opens out to a high-pressure chamber (8), wherein a pressing plunger (9) is arranged movably in the high-pressure chamber (8) and is operatively connected to a hand lever (11) attached to the press head (2), and wherein the high-pressure chamber (8) opens out into an outlet opening (12), and wherein the lubricant press (1) comprises a following plunger (13) which can be inserted into the cartridge (4), and wherein the cartridge (4) has a cartridge sleeve (27) which surrounds a fill volume (5), wherein the following plunger (13) of the lubricant press (1) is inserted movably into the cartridge sleeve (27) to terminate the fill volume (5), wherein a shape of the following plunger (13) is matched to the cartridge (4) in such a way that the fill volume (13) of the cartridge sleeve (27) can be completely emptied by way of the following plunger (13), **characterized in that** a top side (15), facing the terminating wall (6) in the position of use, of the following plunger (13) has a contour which is formed in a manner matching a contour of the terminating wall (6), and the following plunger (13) has a shoulder (21) which encircles the top side (15), such that the following plunger (13) passes with its top side (15) through an extraction opening (28) of the cartridge (4) and bears areally against the terminating wall (6) at least in a sub-region (16) when the cartridge (4) is empty.

2. Lubricant press set (26) according to Claim 1, **characterized in that** an inlet opening (17) of the passage (7) is formed at a point (18) of the terminating wall (6) that is situated furthest in the press head (2) in a cartridge insertion direction (19), which is defined by the cartridge-receiving part (3), and/or **in that** the terminating wall (6), at least in the sub-region (16), and/or the top side (15) are/is of planar form.

3. Lubricant press set (26) according to Claim 1 or 2, **characterized in that** the passage (7) in the terminating wall (6) is arranged at least partially outside the sub-region (16).

4. Lubricant press set (26) according to one of Claims 1 to 3, **characterized in that** the shoulder (21) has an annular shoulder surface (31) which is preferably oriented parallel to the top side (15).

5. Lubricant press set (26) according to one of Claims 1 to 4, **characterized in that** the following plunger (13) is designed without apertures, and/or **in that** the following plunger (13) has an encircling sealing lip (22).

6. Lubricant press set (26) according to one of Claims 1 to 5, **characterized in that** an internal thread (23) is formed in the cartridge-receiving part (3), and/or **in that** a receiving tube (24) is screwed into the cartridge-receiving part (3) and is of open form at a free end (33).

7. Lubricant press set (26) according to one of Claims 1 to 6, **characterized in that** a check valve (34) is arranged in the passage (7), and/or **in that** a plunger pump (10) is arranged after the passage (7).

8. Lubricant press set (26) according to one of the preceding claims, **characterized in that** the fill volume (5) of the cartridge sleeve (27) is delimited by an extraction opening (28), which is preferably closed off prior to first use and which forms a narrowing, and **in that** an outer diameter of the top side (15) of the following plunger (13) is matched to an inner diameter of the extraction opening (28).

9. Lubricant press set (26) according to one of the preceding claims, **characterized in that** a height (29) of the or a shoulder (21), encircling the top side (15), of the following plunger (13) is matched to a protrusion (30) of the cartridge sleeve (27) beyond the extraction opening (28), and/or **in that** an annular shoulder surface (22) of the or a shoulder (21) encircling the top side (15) is matched to an annular inner surface (32) formed between the extraction opening (28) and the cartridge sleeve (27).

10. Lubricant press set (26) according to one of the preceding claims, **characterized in that** the following plunger (13) is arranged in the cartridge sleeve (27) without being acted on and/or without being connected to the press head (2) and/or in a removable manner.

11. Use of a cartridge (4) in a lubricant press set (26) according to one of the preceding claims, **characterized in that** the cartridge (4) is opened at the top side, and **in that**, prior to extraction of lubricant from the cartridge (4), the following plunger (13) of the lubricant press (1) is inserted into the cartridge (4) at the bottom side in order to terminate a fill volume in the cartridge, and **in that**, after complete emptying of the cartridge (4), the following plunger (4) bears with its top side (15) areally against the sub-region (16).

## Revendications

1. Kit de lubrification (26) avec une presse à lubrifiant (1) et avec une cartouche (4), dans lequel la presse à lubrifiant (1) comprend une tête de presse (2) qui présente un réceptacle de cartouche (3), dans lequel le réceptacle de cartouche (3) présente une paroi d'extrémité (6) dans laquelle un passage (7) débouche dans une chambre à haute pression (8), dans lequel dans la chambre à haute pression (8) est disposé de façon mobile un piston de presse (9) qui est en liaison d'actionnement avec un levier manuel (11) monté sur la tête de presse (2), et dans lequel la chambre à haute pression (8) débouche dans une ouverture d'évacuation (12), et dans lequel la presse à lubrifiant (1) comprend un piston suiveur (13) pouvant être inséré dans la cartouche (4) et dans lequel la cartouche (4) présente une douille de cartouche (27) contenant un volume de remplissage (5), dans lequel le piston suiveur (13) de la presse à lubrifiant (1) est inséré de façon mobile dans la douille de cartouche (27) pour obturer le volume de remplissage (5), dans lequel une forme du piston suiveur (13) est adaptée à la cartouche de sorte que le volume de remplissage (13) de la douille de cartouche (27) peut être entièrement vidé avec le piston suiveur (13), **caractérisé en ce qu'**une face supérieure (15) du piston suiveur (13) orientée vers la paroi d'extrémité (6) en position d'utilisation présente un contour qui est configuré de façon adaptée à un contour de la paroi d'extrémité (6) et que le piston suiveur (13) présente un épaulement (21) entourant la face supérieure (15), de sorte que le piston suiveur (13) traverse avec sa face supérieure (15) une ouverture de réception (28) de la cartouche (4) et s'applique à plat, au moins dans une zone partielle (16), sur la paroi d'extrémité (6) quand la cartouche est épuisée.

2. Kit de lubrification (26) selon la revendication 1, **caractérisé en ce qu'**une ouverture d'entrée (17) du passage (7) est formée à un emplacement (18) de la paroi d'extrémité (6) le plus éloigné dans la tête de presse (2) dans une direction d'insertion de cartouche (19) qui est définie par le réceptacle de cartouche (3) et/ou que la paroi d'extrémité (6) au moins dans la zone partielle (16) et/ou la face supérieure (15) a/ont une forme plate.

3. Kit de lubrification (26) selon la revendication 1 ou 2, **caractérisé en ce que** le passage (7) dans la paroi d'extrémité (6) est disposé au moins partiellement à l'extérieur de la zone partielle (16).

4. Kit de lubrification (26) selon l'une des revendications 1 à 3, **caractérisé en ce que** l'épaulement (21) présente une surface d'épaulement (31) annulaire orientée de préférence parallèlement à la face supérieure (15).

5. Kit de lubrification (26) selon l'une des revendications 1 à 4, **caractérisé en ce que** le piston suiveur (13) est configuré sans découpure et/ou que le piston suiveur (13) présente une lèvre d'étanchéité (22) périphérique.

6. Kit de lubrification (26) selon l'une des revendications 1 à 5, **caractérisé en ce que** sur le réceptacle de cartouche (3) est formé un filetage intérieur (23) et/ou que dans le réceptacle de cartouche (3) est vissé un tube de réception (24) qui est ouvert à une extrémité libre (33).

7. Kit de lubrification (26) selon l'une des revendications 1 à 6, **caractérisé en ce que** dans le passage (7) est disposé un clapet anti-retour (34) et/ou qu'une pompe à piston (10) est connectée en aval du passage (7).

8. Kit de lubrification (26) selon l'une des revendications précédentes, **caractérisé en ce que** le volume de remplissage (5) de la douille de cartouche (27) est limité par une ouverture de réception (28) formant un rétrécissement, obturée de préférence avant la première utilisation, et qu'un diamètre extérieur de la face supérieure (15) du piston suiveur (13) est adapté à un diamètre intérieur de l'ouverture de réception (28).

9. Kit de lubrification (26) selon l'une des revendications précédentes, **caractérisé en ce qu'**une hauteur (29) d'un ou de l'épaulement (21) du piston suiveur (13) entourant la face supérieure (15) est adaptée à un surplomb (30) de la douille de cartouche (27) au-dessus de l'ouverture de réception (28) et/ou qu'une surface d'épaulement annulaire (22) d'un ou de l'épaulement (21) entourant la face supérieure (15) est adaptée à une face intérieure annulaire (32) formée entre l'ouverture de réception (28) et la douille de cartouche (27).

10. Kit de lubrification (26) selon l'une des revendications précédentes, **caractérisé en ce que** le piston suiveur (13) est disposé dans la douille de cartouche (27) sans contrainte et/ou sans lien avec la tête de presse (2) et/ou de manière amovible.

11. Utilisation d'une cartouche (4) avec un kit de lubrification (26) selon l'une des revendications précédentes, **caractérisée en ce que** la cartouche (4) est ouverte sur le dessus et qu'avant un prélèvement de lubrifiant de la cartouche (4), le piston suiveur (13) de la presse à lubrifiant (1) est inséré par-dessous dans la cartouche (4) pour obturer un volume de remplissage dans la cartouche et qu'après une vidange complète de la cartouche (4), le piston suiveur (13) s'applique avec sa face supérieure (15) à plat sur la zone partielle (16).
